# EUROPEAN PATENT SPECIFICATION

(11) **EP 4 298 333 B1**
(45) Date of publication and mention of the grant of the patent: **14.01.2026**
(21) Application number: 22706692.5
(22) Date of filing: 25.02.2022
(51) Int. Cl.: F02M 21/02, F16K 1/44, F16K 31/06

(54) **APPARATUS FOR FLUID FLOW THROUGH AN INJECTION VALVE**
VORRICHTUNG ZUM DURCHSTRÖMENDEN EINSPRITZEN EINES EINSPRITZVENTILS
APPAREIL D'ÉCOULEMENT DE FLUIDE À TRAVERS UNE SOUPAPE D'INJECTION

(30) Priority: 26.02.2021 IT 202100004613
(43) Date of publication of application: 03.01.2024
(73) Proprietor: Westport Fuel Systems Italia S.r.l., 12062 Cherasco (CN) (IT)
(72) Inventor: DONFRANCESCO, Diego, 12062 Cherasco (CN) (IT); REVELLI, Luca, 12062 Cherasco (CN) (IT); CERATTO, Danilo, 12062 Cherasco (CN) (IT)
(74) Representative: Studio Torta S.p.A.
(86) International application number: PCT/IB2022/051685
(87) International publication number: WO 2022/180593

(56) References cited:
- WO-A1-99/15782
- DE-A1- 102015 208 767
- US-A- 5 474 234
- US-A1- 2017 138 311

## Description

### Cross-Reference to Related Applications

This Patent Application claims priority from Italian Patent Application No. 102021000004613 filed on February 26, 2021.

### Field of the Invention

The present application relates to an apparatus for delivering fluid through an injection valve, and particularly to upstream sides of the injection valve and through the injection valve to a downstream side.

### Background of the Invention

Gaseous fuel injectors are known to employ a technique known as the double volcano where fuel goes through an injection valve from two upstream sides, where a first upstream side can be considered an outer circumferential side and a second upstream side can be considered an inner circumferential side. This technique allows a reduced stroke length of a moveable valve member to open the same cross-sectional flow area compared to injection valves with a single upstream side. In top feed injectors, where fuel enters the injector from the top, it is relatively straightforward to deliver the fuel to both upstream sides of the injection valve. In bottom feed injectors fuel enters the injector from or near to a bottom side of the injector. In those bottom feed injectors that employ a piston plunger (an elongate member) it is straightforward to drills holes in the plunger to reach the internal part of the injector to access the inner circumferential side of the injection valve. In those bottom feed injectors that employ a floating shutter (a relatively flat member) it isn't straightforward to drill holes in the shutter. It is a challenge with the double volcano technique in so called bottom feed injectors that employ a floating shutter to bring the gaseous fuel to a central or internal region of the fuel injector where the inner circumferential side of the injection valve is located.

The state of the art is lacking in techniques for delivering fluid to upstream sides of an injection valve and through the injection valve to a downstream side. The present apparatus provides a technique for improving the delivery of fluid to upstream sides of an injection valve and through the injection valve to a downstream side. Known gaseous fuel injection valves are disclosed in US 2017/138311, WO 99/15782 and DE 102015208767.

### Summary of the Invention

The present invention provides an improved valve apparatus for an injection valveas claimed in claim 1.

Preferred and optional features of the present invention as defined in the dependent claims.

In further aspects the present invention provides an injection valve as claimed in claim 8 and a fuel injector as claimed in claim 12.

### Brief Description of the Drawings

FIG. 1 is a perspective view of a valve apparatus according to an embodiment.
FIG. 2 is a cross-sectional view of the valve apparatus of FIG. 1 taken along line 3A-3A in FIG. 3.
FIG.3 is a plan view of the valve apparatus of FIG. 2.
FIG. 4 is an enlarged view of the valve apparatus of FIG. 1.
FIG. 5 is a top planar view of a fuel injector employing the valve apparatus of FIG. 1 according to an embodiment.
FIG. 6 is cross-sectional view of the fuel injector of FIG. 5 taken along line 5A-5A.
FIG. 7 is an enlarged view of a portion of the fuel injector of FIG. 6 with an injection valve shown in a closed position.
FIG. 8 is an enlarged view of a portion of fuel injector of FIG. 6 with an injection valve shown in an open position.
FIG. 9 is a cross-sectional view of the fuel injector of FIG. 6 taken along line 6A-6A.
FIG. 10 is a perspective view of a nozzle of the fuel injector of FIG. 6 connected to the valve apparatus of FIG. 1.
FIG. 11 is a cross-sectional view of the nozzle of FIG. 10 taken along line 10A-10A.
FIG. 12 is a perspective view of a valve member apparatus of the fuel injector of FIG. 6.
FIG. 13 is a cross-sectional view of the valve member apparatus of FIG. 12 taken along line 12A-12A.
FIG. 14 is a cross-sectional view of the valve member apparatus of FIG. 12 taken along line 12A-12A shown in a working position.
FIG. 15 is a cross-sectional view of the valve member apparatus of FIG. 12 taken along line 12A-12A shown without a valve member.
FIG. 16 is a cross-sectional perspective view of the valve member apparatus of FIG. 12 taken along line 12A-12A shown without a valve member.
FIG. 17 is a cross-sectional perspective view of the valve member apparatus of FIG. 12 taken along line 12A-12A shown with a valve member

### Detailed Description of Preferred Embodiment(s)

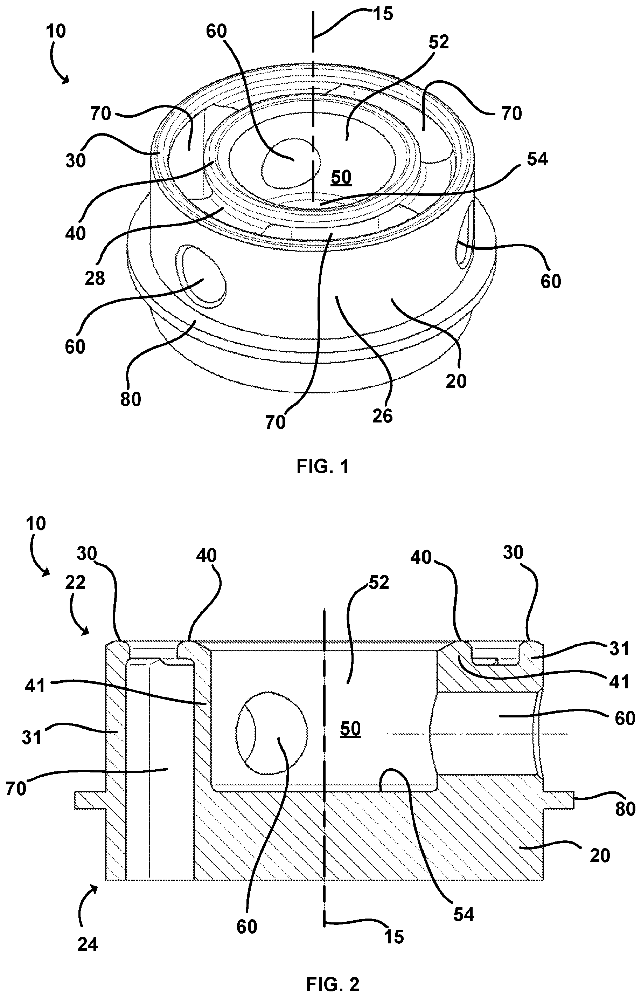

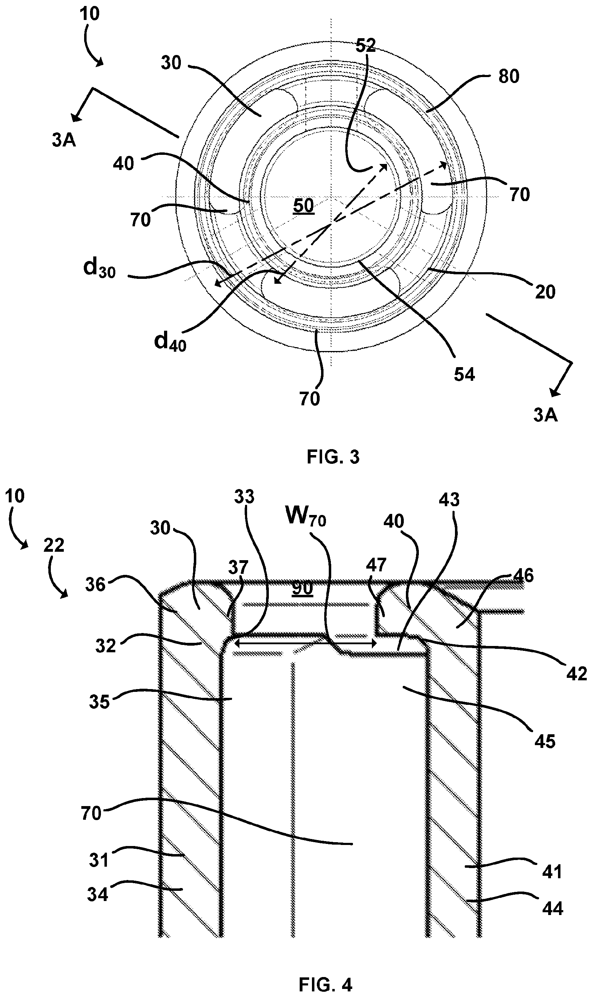

Referring first to FIGS. 1, 2 and 3 there is shown valve apparatus or component 10 employed in a valve, particularly an injection valve of a fuel injector as will be described in more detail below, for directing the flow of fluid through the valve from an upstream side to a downstream side of the valve. Valve apparatus 10 is a new type of double volcano insert or double seat insert. To begin describing the structure of valve apparatus 10, there is body 20 including circumferential outer sealing surface 30 and circumferential inner sealing surface 40 disposed at distal end 22 of the body. In an exemplary embodiment body 20 and outer and inner sealing surfaces 30,40 are cylindrically shaped, and preferably they are coaxial with respect to common longitudinal axis 15, although these are not requirements. Outer sealing surface 30 is also referred to as outer valve seat 30 and inner sealing surface 40 is also referred to as inner valve seat 40. The two valve seats 30 and 40 allude to the colloquial name of component 10 as a double volcano insert, where fluid flows over two separate sealing surfaces, as will be described in more detail below. Interior cavity 50 extends into body 20 from distal end 22 within circumferential inner sealing surface 40, and preferably is cylindrically shaped and coaxial with axis 15. Interior cavity 50 includes circumferential surface 52 extending from radial or lateral surface 54 of body 20 towards distal end 22. Radial passageway 60 extends from outer surface or perimeter 26 of body 20 into interior cavity 50, radially passing longitudinal projections of sealing surfaces 30 and 40. In the illustrated embodiment there are three radial passageways 60, although this is not a requirement and in other embodiments there can be one radial passageway 60, or generally a plurality of radial passageways 60 (meaning two or more radial passageways). Radial passageway 60 is also referred to as extending through lateral section 28 of body 20. Passageway 60 fluidly connects interior cavity 50 with a volume radially outward of outer perimeter 26. Longitudinal passageway 70 extends through body 20 from distal end 22 to end 24 of the body between the first and second sealing surfaces 30 and 40. In the illustrated embodiment there are three longitudinal passageways 70, although this is not a requirement and in other embodiments there can be one longitudinal passageway 70, or generally a plurality of longitudinal passageways 70. A cross-sectional area of longitudinal passageway 70 is kidney shaped (best seen in FIG. 3), which can be described as a concave outer side and a convex inner side with rounded ends, although this is not a requirement and in other embodiments longitudinal passageways 70 can have other shapes, for example, circular. Preferably, radial passageways 60 are evenly angularly spaced around axis 15, and longitudinal passageways 70 are evenly angularly spaced around axis 15, and passageways 60 and 70 are interlaced as shown in the illustrated embodiment. Circumferential flange 80 extends around body 20 such that sealing surfaces 30 and 40 and radial passageways 60 are on a same longitudinal side of the flange. Flange 80 functions as an assembly feature to locate and secure valve apparatus 10 to, for example, a nozzle, as will described in more detail below. In the illustrated embodiment flange 80 is annular or ring-shaped. In an exemplary embodiment valve apparatus 10 is an integrated component (that is, a single component), made from metal or plastic, that can be fabricated by, for example, machining, molding, injection molding, forging, casting, and 3D printing.

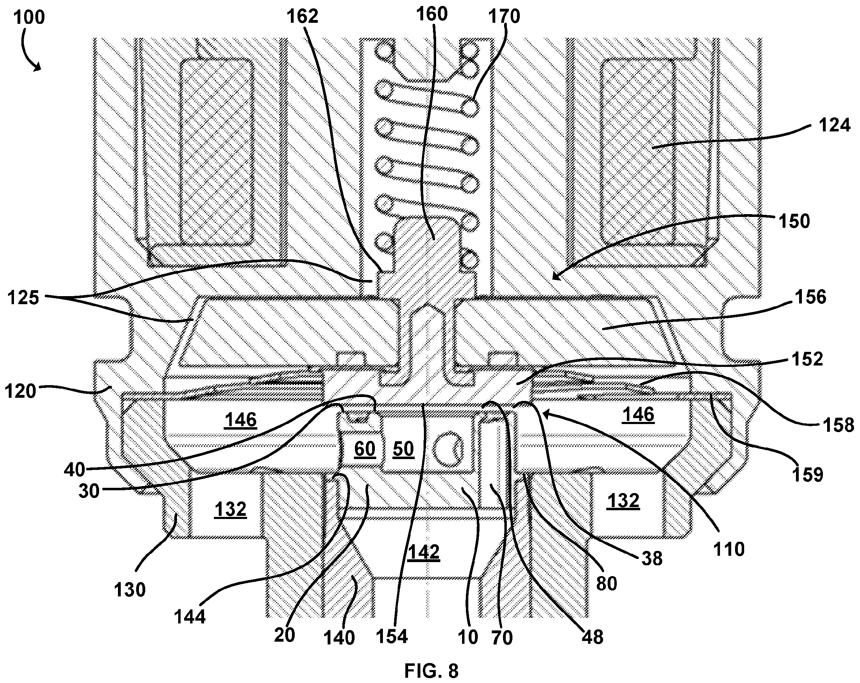

Referring now to FIG. 4, in the illustrated embodiment outer sealing surface 30 is a flat surface located at a crown (that is, the highest point or zenith) of circumferential outer wall 31 and abutting outer perimeter 26. Similarly, inner sealing surface 40 is a flat surface located at a crown or zenith of circumferential inner wall 41. In other embodiments sealing surfaces 30 and 40 can have other shapes, for example they can be curved surfaces that have various contours, such as circular, elliptical, parabolic, or hyperbolic surfaces. Outer and inner walls 31 and 41 respectively have different longitudinal lengths in the vicinity of radial passageway 60 compared to in the vicinity of longitudinal passageways 70, which is best seen in FIG. 2 where the right-hand side illustrates the vicinity of radial passageway 60 and the left-hand side illustrates the vicinity of longitudinal passageway 70. With reference to FIG. 4, in the illustrated embodiment overhang 33 at distal end 32 of outer wall 31 protrudes radially inwardly from longitudinal portion 34 of outer wall 31, and overhang 43 at distal end 42 protrudes radially outwardly from longitudinal portion 44 of inner wall 41. In some applications it is desirable to have a relatively small valve apparatus 10, and therefore diameter d₃₀ of outer sealing surface 30 (seen in FIG.3) is made small. Correspondingly, diameter d₄₀ of inner sealing surface 40 is made, preferably, close to diameter d₃₀ such that width W₇₀ of passageway 70 (seen in FIG. 4) between overhangs 33 and 43 is small and a cross-sectional flow area over sealing surface 40 is less than but close to a cross-sectional flow area over sealing surface 30 (through gaps 48 and 38 respectively as seen in FIG. 8 as will be explained in more detail below). A width of passageway 70 between longitudinal portions 34 and 44 can be larger than width W₇₀. For sealing surfaces 30 and 40 to not be too sharp, when sealing against a soft surface such as a rubber surface, distal end 32 of outer wall 31 includes sloped sections 36 and 37 relative to and on either side of flat sealing surface 30, and distal end 42 of inner wall 41 includes sloped sections 46 and 47 relative to and on either side of flat sealing surface 40. Sloped sections 36,37 and 46,47 can also contribute to a sealing engagement with that soft surface. Sloped sections 36, 37 and 46, 47 may also improve fluid flow across and around respective sealing surfaces 30 and 40. As a secondary benefit, overhangs 33 and 43 both overhang longitudinal passageway 70, which can have beneficial fluid flow dynamic behavior advantages. For example, as fluid streams flow over sealing surfaces 30 and 40 into longitudinal passageway 70 these fluid streams collide, which can create undesirable turbulence and pressure drops in and across intersection zone 90. However, as the fluid flows into longitudinal passageway 70 low pressure zones 35 and 45 form under overhangs 33 and 43 respectively, which has the effect of drawing the fluid traveling over sealing surface 30 into or towards zone 35 and drawing the fluid traveling over sealing surface 40 into or towards zone 45, which tends to reduce the turbulence in and pressure drop across intersection zone 90. Another advantage of having enlarged distal ends 32 and 42 compared to longitudinal portions 34 and 44 respectively is that it untethers sealing surface 30 and sloped sections 36 and 37 from longitudinal portion 34 so that the dimensions of the first ones can be set independently to the dimension of the later one, and it untethers sealing surface 40 and sloped sections 46 and 47 from longitudinal portion 44 so that the dimensions of the first ones can be set independently to the dimension of the later one. In those embodiments where overhang 33 extends all the way around the circumference of outer wall 31, the overhang can allow sealing surface 30 to be radially-inwardly offset with respect to longitudinal portion 34, which can help to reduce shock when sealing surface 30 contacts a shutter, as will be explained in more detail below, by providing a flexion moment between sealing surface 30 and longitudinal portion 34. Similarly, in those embodiments where overhang 43 extends all the way around the circumference of inner wall 41, the overhang can allow sealing surface 40 to be radially-outwardly offset with respect to longitudinal portion 44, which can help to reduce shock when sealing surface 40 contacts a shutter by providing a flexion moment between sealing surface 40 and longitudinal portion 44.

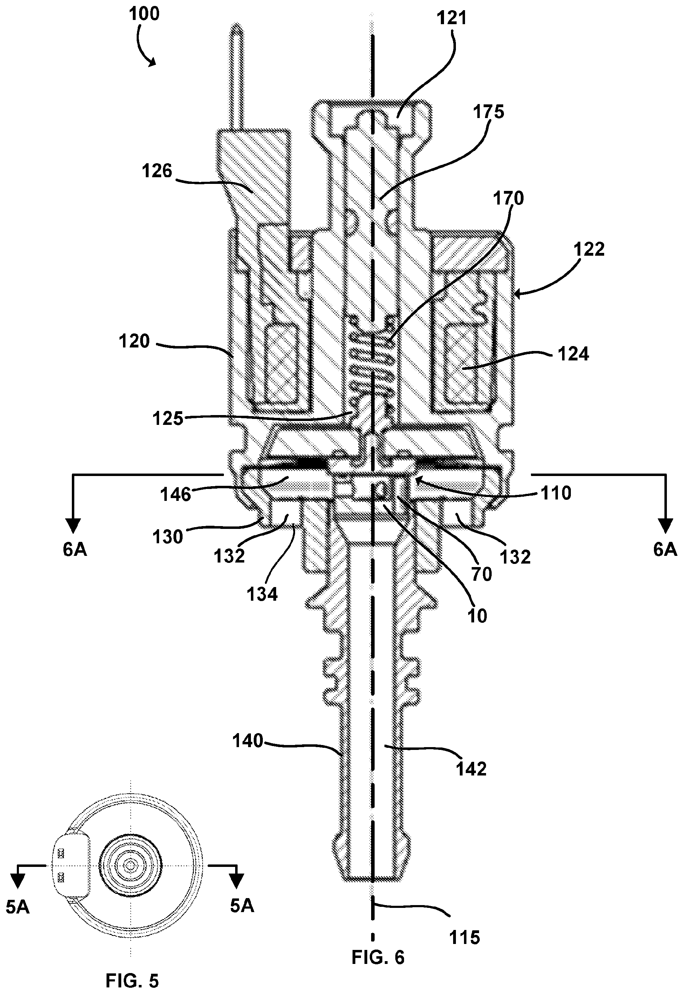

Referring now to FIG. 6 there is shown gaseous fuel injector 100 that employs valve apparatus 10 in injection valve 110. A gaseous fuel is any fuel that is in the gas state at standard temperature and pressure, which is defined herein as a temperature of 0 degrees Celsius (0 °C) and an absolute pressure of 100,000 Pascals (100 kPa) respectively. A pressure of 100 kPa is equal to 1 bar, which is slightly more than one atmosphere (1 atm). Although any type of gaseous fuel can be employed in fuel injector 100, methane, propane (particularly LPG), natural gas (particularly CNG), hydrogen, or combinations thereof are gaseous fuels that are contemplated. Injector 100 includes upper injector body 120, inlet manifold 130 and nozzle 140. Upper injector body 120 contains in part actuator 122 that in the illustrated embodiment is a solenoid including coils 124 connected to electrical input 126. The upper injector body 120 also operates as a flux path in the solenoid for magnetic flux generated when an electric current from an injector driver (not shown) connected to electrical input 126 is sent through coils 124.

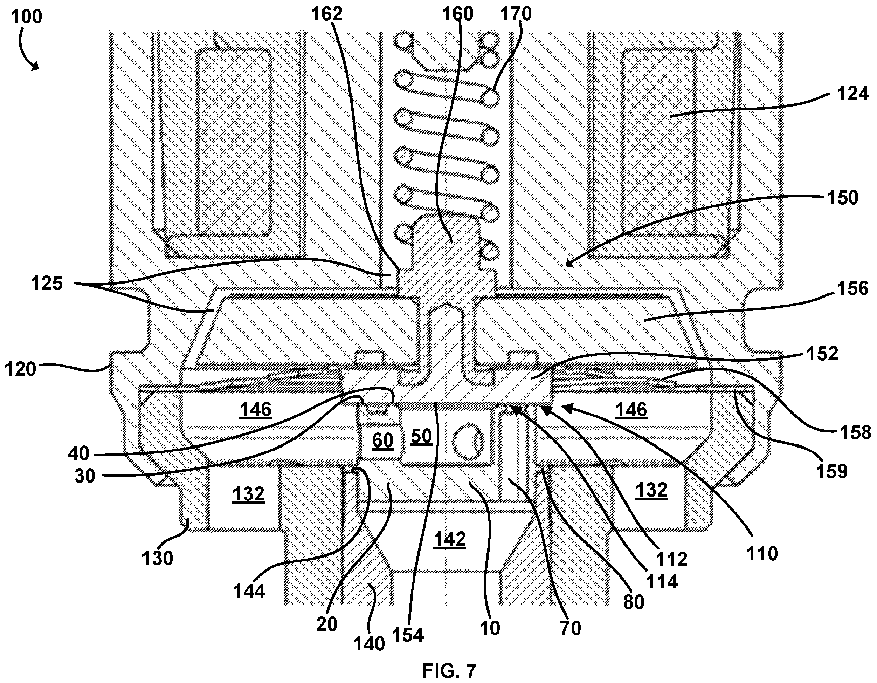

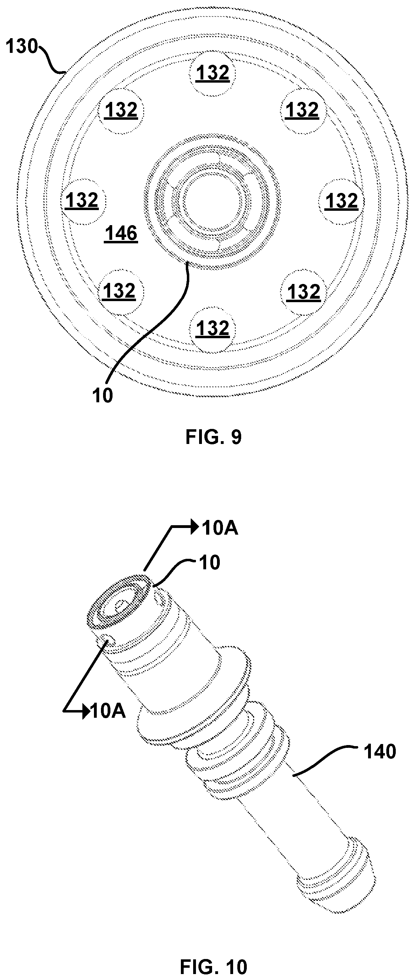

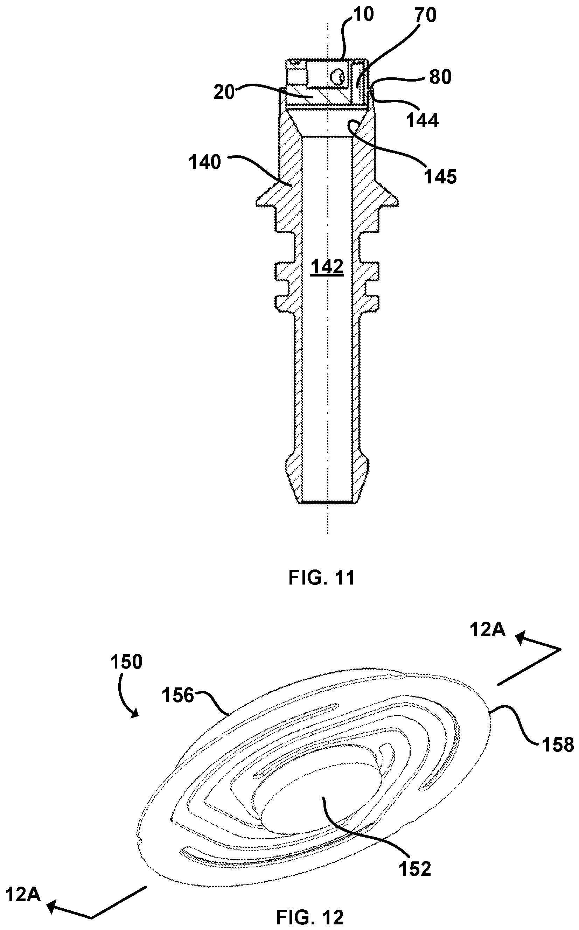

Referring now to FIGS. 6, 7 and 9, inlet manifold 130 includes at least one fuel inlet passageway 132 in fluid communication with a fuel source at opening 134, such as a fuel rail (not shown), and in fluid communication to circumferential flow cavity 146 (best seen in FIGS. 7 and 9). In the illustrated embodiment inlet manifold 130 includes eight fuel inlet passageways 132 (best seen in FIG. 9). Referring again to FIG. 6, outlet passageway 142 extends longitudinally through nozzle 140 with respect to axis 115. Valve apparatus 10 is connected to nozzle 140 at one end of fuel outlet passageway 142 (best seen in FIGS. 10 and 11). For example, end 24 of body 20 can be inserted into outlet passageway 142 such that flange 80 abuts distal end 144 of the nozzle (best seen in FIG. 11) where it is then welded, for example laser welded, in place to form a fluid tight seal. In the illustrated embodiment outlet passageway 142 widens near end 144 by tapered section 145. It may be possible to employ other techniques to connect valve apparatus 10 with nozzle 140, such as for example press-fitting, interference-fitting, and/or clamping when a fluid tight seal can be created between valve apparatus 10 and nozzle 140 using these other techniques. Outlet passageway 142 is in direct fluid communication with and downstream from longitudinal passageways 70 of valve apparatus 10.

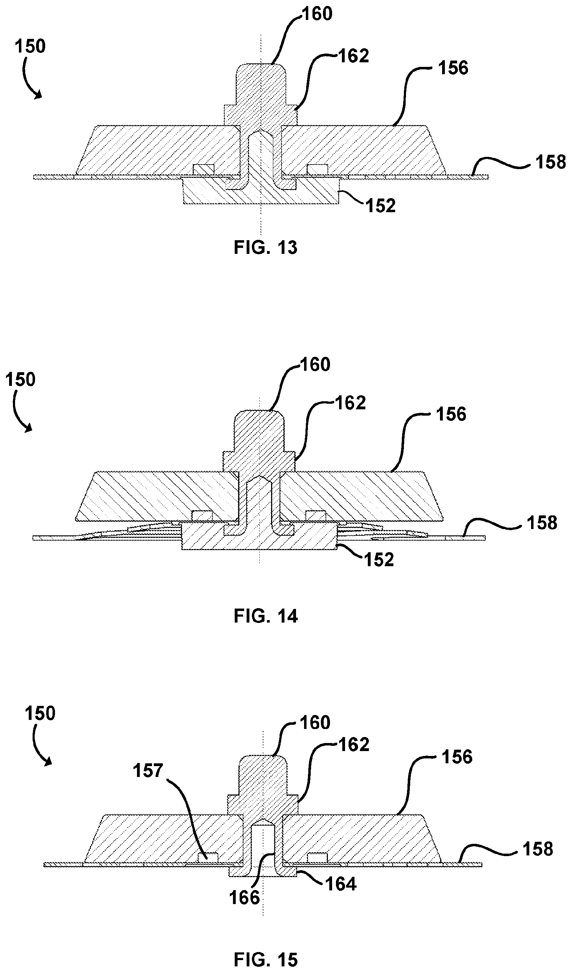

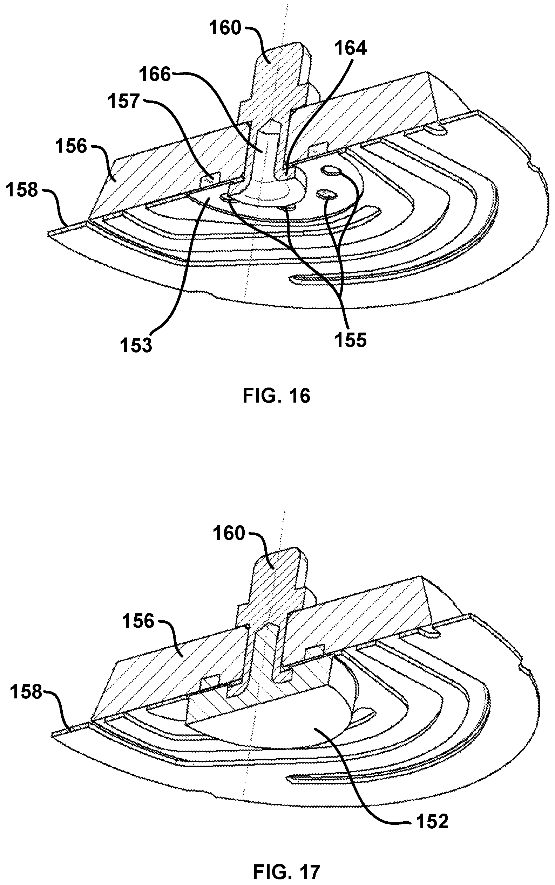

Referring now to FIG. 7, injection valve 110 is described in more detail. Injection valve 110 includes valve member or shutter 152 working in combination with valve apparatus 10. Shutter 152 can be a relatively thin plate-like member that does not have enough material to be able to drill radial or lateral passageways with a required total cross-sectional flow area for the requirements of some injector applications. Sealing surface 154 of shutter 152 abuts valve seats 30 and 40 of valve apparatus 10 when injection valve 110 is in the closed position (as seen in FIG. 7) and is spaced apart from valve seats 30 and 40 when injection valve 110 is in the open position (as seen in FIG. 8). Injection valve 110 includes outer injection valve 112 formed by shutter 152 and outer sealing surface 30 and inner injection valve 114 formed by shutter 152 and inner sealing surface 40. In the illustrated embodiment surface 154 is a flat surface parallel to sealing surfaces 30 and 40. Actuator 122 is actuated to move shutter 152 between the closed position and the open position, which will be described in more detail below. It is advantageous for shutter 152 to be relatively thin since it has reduced mass compared to a relatively thick shutter and therefore requires less energy to move the shutter. In other embodiments it is possible that shutter 152 is fixed in position and valve apparatus 10 is configured to move between the closed position and the open position, such as for example when valve apparatus 10 is fixed to an outwardly opening needle in an outwardly opening injector, although this configuration would require a different actuator configuration that may not be suitable for automotive applications, and in this regard is not the preferred configuration for fuel injectors, but may be suitable for other type of injector applications. Shutter 152 is part of a valve member apparatus 150 (best seen in FIGS. 13 and 14) that is an assembly of components in the illustrated embodiment. Valve member apparatus 150 also includes armature or magnetic plate 156 and flat or disc spring 158 that are secured together by fastener 160. In the illustrated embodiment fastener 160 is a rivet that clamps armature 156 and flat spring 158 together (best seen in FIGS. 15 and 16) between flange 162 of the rivet and flared section 164 of the rivet. Flared portion 164 clamps within area 153 of the flat spring 158, where area 153 is circular in the illustrated embodiment and is a part of flat spring 158 that is not flexed when the flat spring is in a working position. Preferably shutter 152 is made from a rubber material that is overmolded, for example injection molded, onto area 153 of flat spring 158 and through bores 155 into annular channel 157 in armature 156, and into bore 166 of fastener 160. In other embodiments shutter 152 can be made from other materials, such as metal or plastic, and mechanically fixed to armature 156, flat spring 158 and fastener 160, and these metal or plastic shutters could include an overmold, such as rubber. Outer perimeter portion 159 of flat spring 158 (best seen in FIG. 7) is secured between upper injector body 120 and inlet manifold 130 thereby securing valve member apparatus 150 within fuel injector 100. With reference to FIGS. 6 and 7, spring 170 is retained by spring retainer 175 (seen in FIG. 6) and biases valve member apparatus 150 by pressing against fastener 160 (that also functions as a spring retainer) to urge shutter 152 onto valve seats 30 and 40 of valve apparatus 10 such that injection valve 110 is biased in the closed position. In the illustrated embodiment spring retainer 175 is configured to set a fixed preload on spring 170 by being secured by end cap 121; however, in other embodiments spring retainer 175 can be configured to set an adjustable preload, for example by being threadedly received within upper injector body 120. In an exemplary embodiment spring 170 is a helical compression spring. As seen in FIGS. 7 and 14, flat spring 158 is in a working position where it is flexed away from a neutral position when injection valve 110 is in the closed position. The neutral position for flat spring 158 occurs when the disc spring is flat (as seen in FIGS. 13 and 15). Both flat spring 158 and spring 170 urge valve member 152 towards valve seats 30 and 40 when injection valve 110 is in the closed position. When injection valve 110 is opened, as shown in FIG. 8, the flexion of flat spring 158 increases and spring 170 compresses. Flat spring 158 and spring 170 can have different spring rates to improve the stability of controlling movement of valve member 152. Referring again to Fig. 7, flow cavity 146 is defined by inlet manifold 130 and upper injector body 120 since fluid from inlet passageways 132 can flow through flat spring 158 into upper cavity 125 above valve member apparatus 150.

In operation, when injection valve 110 is in the closed position, fluid from inlet passageways 132 fills flow cavity 146 (including upper cavity 125) and fills interior cavity 50 of valve apparatus 10 through radial passageways 60 such that the flow cavity and the interior cavity are at supply pressure, and both upstream sides of valve seats 30 and 40 are also at supply pressure. Actuator 122 is actuated to send an electric current through coils 124 to create magnetic flux that draws armature 156 closer to injector body 120 along longitudinal axis 115 of fuel injector 100 (seen in FIG. 6), thereby opening injection valve 110. In actuation, when injection valve 110 is in the open position and shutter 152 is spaced apart from valve seats 30 and 40, fluid from cavity 146 and interior cavity 50 flows between the shutter and valve seats 30 and 40 through longitudinal passageways 70 into outlet passageway 142 of nozzle 140. This flow of fluid resembles the explosion of lava from two side-by-side volcanoes, in a way, and therefore valve apparatus 10 is referred to as a double volcano insert. Shutter 152 is referred to as a floating or moveable shutter by this operation of injection valve 110.

When injection valve 110 is in the open position, the cross-sectional flow area through circumferential gap 48 (seen in FIG. 8) between valve seat 40 and shutter 152 preferably is less than the sum of cross-sectional flow areas through radial passageways 60 in valve apparatus 10. That is, the flow restriction if any is typically at gap 48. Similarly, when injection valve 110 is in the open position, the cross-sectional flow area through circumferential gaps 38 and 48 between valve seats 30 and 40 respectively and shutter 152 preferably is less than the cross-sectional flow area through flow cavity 146, and also less than the cross-sectional flow area through the sum of cross-sectional flow areas through passageways 132 in inlet manifold 130.

Valve apparatus 10 includes characteristics that improve fluid flow through the valve apparatus in those applications where fluid upstream of valve apparatus 10 flows laterally or radially into the valve apparatus instead of longitudinally or axially. For example, fluid upstream of valve apparatus 10 surrounds outer perimeter 26, such as in circumferential flow cavity 146, and abuts outer circumferential sealing surface 30 and enters the valve apparatus laterally or radially through radial passageways 60 into interior cavity 50 and abuts inner circumferential sealing surface 40 when injection valve 110 is closed. The response time of fluid flow through valve apparatus 10 when injection valve 110 is opened is improved and there is reduced pressure drop through valve apparatus 10 when outer sealing surface 30 abuts (that is, located immediately adjacent) outer perimeter 26 (for example, a cross-sectional flow area through outer injection valve 112 is increased as diameter d₃₀ of outer sealing surface 30 increases towards a limit of a diameter of outer perimeter 26 and when upstream fluid is immediately in contact with the entirety of sealing surface 30 before entering valve apparatus 10). Similarly, diameter d₄₀ of inner sealing surface 40 can be increased as diameter d₃₀ is increased towards the limit of the diameter of outer perimeter 26, which improves the response time of fluid flow through inner injection valve 114 and reduces the pressure drop through injection valve 110. Diameters d₃₀ and d₄₀ determine width W₇₀ of passageway 70 (seen in FIGS. 3 and 4) and the cross-sectional flow area therethrough. For example, by keeping diameter d₃₀ constant and increasing d₄₀ consequently reduces width W₇₀, which reduces the cross-sectional flow area through passageway 70 when injection valve 110 is opened. Moreover, the larger the difference between diameters d₃₀ and d₄₀ the greater is a surface where the fluid at supply pressure has an effect on shutter 152 (with respect to FIG. 7, the difference between the downward fluid pressure on shutter 152 and the upward fluid pressure on the shutter when injection valve 110 is closed) and then the higher is the force required from actuator 122 to overcome this pressure (in addition to the force from springs 158 and 170) to open injection valve 110. A balance is selected between diameters d₃₀ and d₄₀ of sealing surfaces 30 and 40, a cross-section of passageway(s) 70 (in the vicinity of width W70) and a cross-section of passageway(s) 60.

An advantage of having two upstream valve seats 30 and 40 with respect to injection valve 110 is that injection valve 110 can have a reduced stroke length for the same cross-section flow area through the injection valve. That is, if there was only valve seat 30, then shutter 152 would need to be spaced apart from seat 30 more (larger stroke length) when injection valve 110 was open in order to have the same cross-sectional flow area compared to when there are both valve seats 30 and 40. The design of shutter 152 is simplified when fluid is delivered to the upstream side of valve seat 40 through radial passageways 60 in valve apparatus 10, compared to designs that feed fluid through a plunger to an upstream side of a second interior valve seat (corresponding to valve seat 40 in the present invention). The simplification of components promotes the standardization of valve apparatus 10 and shutter 152 for other applications. This technique allows shutter 152 to be standardized across various injector platforms, for example the shutter can also be used as is for injector versions with a single volcano where the injector is specified to have a lower flow rate, a lower pressure range, and reduced costs.

Listing of reference signs:
10: valve apparatus
15: common longitudinal axis
20: body
22: distal end of body 20
24: end of body 20
26: outer perimeter
28: lateral section of body 20
30: circumferential outer sealing surface
31: circumferential outer wall
32: distal end of wall 31
33: radially inward overhang
34: longitudinal portion of outer wall 31
35: low pressure zone
36: upstream sloped section
37: downstream sloped section
38: circumferential gap
40: circumferential inner sealing surface
41: circumferential inner wall
42: distal end of wall 41
43: radially outward overhang
44: longitudinal portion of outer wall 41
45: low pressure zone
46: upstream sloped section
47: downstream sloped section
48: circumferential gap
50: interior cavity
52: circumferential surface
54: lateral surface of body 20
60: radial passageway
70: longitudinal passageway
80: circumferential flange
90: intersection zone
100: gaseous fuel injector
110: injection valve
115: longitudinal axis
120: upper injector body
122: actuator
124: coils
125: upper cavity
126: electrical input
130: inlet manifold
132: inlet passageway
134: opening of inlet passageway 132
140: nozzle
142: outlet passageway
144: distal end of nozzle 140
145: tapered section
146: circumferential flow cavity
150: valve member apparatus
152: valve member or shutter
153: circular area of flat spring 158
154: sealing surface
155: bores in area 153
156: armature or magnetic plate
157: annular channel in armature 156
158: flat or disc spring
159: outer perimeter portion
160: fastener
162: flange of fastener 160
164: flared portion of fastener 160
166: bore of fastener
170: spring
175: spring retainer

While particular elements, embodiments and applications of the present invention have been shown and described, it will be understood, that the invention is not limited thereto since modifications can be made by those skilled in the art without departing from the scope of the claims, particularly in light of the foregoing teachings.

## Claims

1. A valve apparatus for an injection valve comprising:
a body (20);
a circumferential outer sealing surface (30) for the injection valve at a first distal end (22) of the body;
a circumferential inner sealing surface (40) for the injection valve at the first distal end (22) of the body;
an interior cavity (50) extending longitudinally from the first distal end (22) into the body (20) within the circumferential inner sealing surface (40);
a radial passageway (60) extending from an outer perimeter of the body through the body to the interior cavity; and
a longitudinal passageway (70) extending through the body from the first distal end (22) to a second end (24) of the body between the circumferential outer and inner sealing surfaces (30,40);
wherein a cross-sectional area of the longitudinal passageway (70) comprises a concave outer side and a convex inner side;
wherein the body (20) further comprises a circumferential outer wall (31) and a circumferential inner wall (41), and the circumferential outer sealing surface (30) comprises a first flat surface or a first curved surface at a crown of the circumferential outer wall (31), and the circumferential inner sealing surface (40) comprises a second flat surface or a second curved surface at a crown of the circumferential inner wall (41);
**characterized in that** the circumferential outer wall (31) comprises a radially inwardly protruding overhang (33) at a distal end of the circumferential outer wall and the circumferential inner wall (41) includes a radially outwardly protruding overhang (43) at a distal end of the circumferential inner wall, wherein the radially inwardly protruding overhang (33) and the radially outwardly protruding overhang (43) both overhang the longitudinal passageway (70).

2. The valve apparatus of claim 1, wherein:
the radial passageway is one of a plurality of radial passageways (60), each radial passageway (60) extending from the outer perimeter of the body through the body to the interior cavity; and
the longitudinal passageway is one of a plurality of longitudinal passageways (70), each longitudinal passageway extending through the body from the first distal end (22) to the second end (24) of the body between the circumferential outer and inner sealing surfaces (30,40).

3. The valve apparatus of claim 1, further comprising:
a second radial passageway (60) extending from the outer perimeter of the body through the body to the interior cavity;
a third radial passageway (60) extending from the outer perimeter of the body through the body to the interior cavity;
a second longitudinal passageway (70) extending through the body from the first distal end to the second end of the body between the circumferential outer and inner sealing surfaces; and
a third longitudinal passageway (70) extending through the body from the first distal end to the second end of the body between the circumferential outer and inner sealing surfaces.

4. The valve apparatus of any one of the preceding claims, wherein the valve apparatus is an integrated component; or the valve apparatus is made from metal or plastic.

5. The valve apparatus of any one of the preceding claims, further comprising a circumferential flange (80) protruding radially outwardly from the body (20).

6. The valve apparatus of any preceding claim, wherein the distal end of the circumferential outer wall (31) includes sloped sections (36,37) on either side of the circumferential outer sealing surface (30) or the distal end of the circumferential inner wall (41) includes sloped sections (46,47) on either side of the circumferential inner sealing surface (40).

7. The valve apparatus of claim 1, wherein the body is cylindrical, and the circumferential outer sealing surface (30) and the circumferential inner sealing surface (40) are circular; or the circumferential outer sealing surface (30) abuts the outer perimeter of the body.

8. An injection valve (110) comprising:
the valve apparatus (10) as claimed in any one of the preceding claims; and
a valve member (152);
wherein the valve member (152) abuts the circumferential outer sealing surface (30) and the circumferential inner sealing surface (40) when the injection valve is in a closed position, and the valve member is spaced apart from the circumferential outer sealing surface and the circumferential inner sealing surface when the injection valve is in an open position.

9. The injection valve of claim 8, wherein
an upstream side of the injection valve includes the interior cavity (20) and the radial passageway (60); and
a downstream side of the injection valve includes the longitudinal passageway (70).

10. The injection valve of claim 8, wherein the valve member (152) includes a flat surface as a third sealing surface (154), the flat surface abuts the circumferential outer sealing surface (30) and the circumferential inner sealing surface (40) when the injection valve is in the closed position, and the flat surface is spaced apart from the circumferential outer sealing surface and the circumferential inner sealing surface when the injection valve is in the open position.

11. The injection valve of claim 8, wherein the valve member (152) is part of a valve member apparatus, the valve member apparatus further comprising:
an armature (156);
a flat spring (158);
and a fastener (160) securing the valve member, the armature, and the flat spring together;
wherein a perimeter portion of the flat spring is fixed when in operation.

12. A fuel injector for an internal combustion engine comprising:
the injection valve as claimed in any one of claims 8 to 11;
a spring (170) biasing the injection valve to the closed position;
an actuator (122) for selectively moving the valve member (152);
an upper injector body (120) surrounding the actuator;
an outlet nozzle (140) including an outlet passageway (142), the valve apparatus connected to the outlet nozzle at one end of the outlet passageway, the longitudinal passageway (70) of the valve apparatus is in direct fluid communication with the outlet passageway (142);
a fuel inlet manifold (130) including at least one inlet passageway and surrounding the outlet nozzle (140) at the one end of the outlet passageway (142); and
a circumferential flow cavity (146) surrounding the valve apparatus and defined within the upper injector body (120) and the fuel inlet manifold (130), the circumferential flow cavity (146) in fluid communication with the inlet passageway (142) and the passageway (60) of the valve apparatus.

13. The fuel injector of claim 12 and the injection valve of claim 11, wherein the perimeter portion of the flat spring (158) is clamped between the upper injector body (120) and the fuel inlet manifold (130).

## Patentansprüche

1. Ventilvorrichtung für ein Einspritzventil, umfassend:
einen Körper (20);
eine umlaufende äußere Dichtoberfläche (30) für das Einspritzventil an einem ersten distalen Ende (22) des Körpers;
eine umlaufende innere Dichtoberfläche (40) für das Einspritzventil an dem ersten distalen Ende (22) des Körpers;
einen Innenhohlraum (50), der sich in Längsrichtung von dem ersten distalen Ende (22) in den Körper (20) innerhalb der umlaufenden inneren Dichtoberfläche (40) erstreckt;
einen radialen Durchgang (60), der sich von einem Außenumfang des Körpers durch den Körper zu dem Innenhohlraum erstreckt; und
einen Längsdurchgang (70), der sich durch den Körper von dem ersten distalen Ende (22) zu einem zweiten Ende (24) des Körpers zwischen der umlaufenden äußeren und inneren Dichtoberfläche (30, 40) erstreckt;
wobei eine Querschnittsfläche des Längsdurchgangs (70) eine konkave Außenseite und eine konvexe Innenseite umfasst;
wobei der Körper (20) ferner eine umlaufende Außenwand (31) und eine umlaufende Innenwand (41) umfasst und die umlaufende äußere Dichtoberfläche (30) eine erste flache Oberfläche oder eine erste gekrümmte Oberfläche an einer Krone der umlaufenden Außenwand (31) umfasst und die umlaufende innere Dichtoberfläche (40) eine zweite flache Oberfläche oder eine zweite gekrümmte Oberfläche an einer Krone der umlaufenden Innenwand (41) umfasst;
**dadurch gekennzeichnet, dass** die umlaufende Außenwand (31) einen radial nach innen vorstehenden Überstand (33) an einem distalen Ende der umlaufenden Außenwand umfasst und die umlaufende Innenwand (41) einen radial nach außen vorstehenden Überstand (43) an einem distalen Ende der umlaufenden Innenwand einschließt, wobei der radial nach innen vorstehende Überstand (33) und der radial nach außen vorstehende Überstand (43) beide den Längsdurchgang (70) überragen.

2. Ventilvorrichtung nach Anspruch 1, wobei:
der radiale Durchgang einer von einer Vielzahl von radialen Durchgängen (60) ist, wobei sich jeder radiale Durchgang (60) von dem Außenumfang des Körpers durch den Körper zu dem Innenhohlraum erstreckt; und
der Längsdurchgang einer von einer Vielzahl von Längsdurchgängen (70) ist, wobei sich jeder Längsdurchgang durch den Körper vom ersten distalen Ende (22) zum zweiten Ende (24) des Körpers zwischen der umlaufenden äußeren und inneren Dichtoberfläche (30, 40) erstreckt.

3. Ventilvorrichtung nach Anspruch 1, ferner umfassend:
einen zweiten radialen Durchgang (60), der sich von dem Außenumfang des Körpers durch den Körper zu dem Innenhohlraum erstreckt;
einen dritten radialen Durchgang (60), der sich von dem Außenumfang des Körpers durch den Körper zu dem Innenhohlraum erstreckt;
einen zweiten Längsdurchgang (70), der sich durch den Körper vom ersten distalen Ende zum zweiten Ende des Körpers zwischen der umlaufenden äußeren und inneren Dichtoberfläche erstreckt; und
einen dritten Längsdurchgang (70), der sich durch den Körper vom ersten distalen Ende zum zweiten Ende des Körpers zwischen der umlaufenden äußeren und inneren Dichtoberfläche erstreckt.

4. Ventilvorrichtung nach einem der vorhergehenden Ansprüche, wobei die Ventilvorrichtung eine integrierte Komponente ist; oder die Ventilvorrichtung aus Metall oder Kunststoff hergestellt ist.

5. Ventilvorrichtung nach einem der vorhergehenden Ansprüche, ferner umfassend einen Umfangsflansch (80), der von dem Körper (20) radial nach außen vorsteht.

6. Ventilvorrichtung nach einem der vorhergehenden Ansprüche, wobei das distale Ende der umlaufenden Außenwand (31) geneigte Abschnitte (36, 37) auf beiden Seiten der umlaufenden äußere Dichtoberfläche (30) einschließt oder das distale Ende der umlaufenden Innenwand (41) geneigte Abschnitte (46, 47) auf beiden Seiten der umlaufenden inneren Dichtoberfläche (40) einschließt.

7. Ventilvorrichtung nach Anspruch 1, wobei der Körper zylindrisch ist und die umlaufende äußere Dichtoberfläche (30) und die umlaufende innere Dichtoberfläche (40) kreisförmig sind; oder die umlaufende äußere Dichtoberfläche (30) an dem Außenumfang des Körpers anliegt.

8. Einspritzventil (110), umfassend:
die Ventilvorrichtung (10) nach einem der vorhergehenden Ansprüche; und
ein Ventilelement (152);
wobei das Ventilelement (152) an der umlaufenden äußeren Dichtoberfläche (30) und der umlaufenden inneren Dichtoberfläche (40) anliegt, wenn sich das Einspritzventil in einer geschlossenen Position befindet, und das Ventilelement von der umlaufenden äußeren Dichtoberfläche und der umlaufenden inneren Dichtoberfläche beabstandet ist, wenn sich das Einspritzventil in einer offenen Position befindet.

9. Einspritzventil nach Anspruch 8, wobei
eine stromaufwärtige Seite des Einspritzventils den Innenhohlraum (20) und den radialen Durchgang (60) einschließt; und
eine stromabwärtige Seite des Einspritzventils den Längsdurchgang (70) einschließt.

10. Einspritzventil nach Anspruch 8, wobei das Ventilelement (152) eine flache Oberfläche als eine dritte Dichtoberfläche (154) einschließt, die flache Oberfläche an der umlaufenden äußeren Dichtoberfläche (30) und der umlaufenden inneren Dichtoberfläche (40) anliegt, wenn sich das Einspritzventil in der geschlossenen Position befindet, und die flache Oberfläche von der umlaufenden äußeren Dichtoberfläche und der umlaufenden inneren Dichtoberfläche beabstandet ist, wenn sich das Einspritzventil in der offenen Position befindet.

11. Einspritzventil nach Anspruch 8, wobei das Ventilelement (152) Teil einer Ventilelementvorrichtung ist, wobei die Ventilelementvorrichtung ferner Folgendes umfasst:
einen Anker (156);
eine Blattfeder (158);
und ein Befestigungselement (160), das das Ventilelement, den Anker und die Blattfeder aneinander sichert;
wobei ein Umfangsabschnitt der Blattfeder fixiert ist, wenn er in Betrieb ist.

12. Kraftstoffeinspritzdüse für einen Verbrennungsmotor, die Folgendes umfasst:
das Einspritzventil nach einem der Ansprüche 8 bis 11;
eine Feder (170), die das Einspritzventil in die geschlossene Position vorspannt;
einen Aktor (122) zum selektiven Bewegen des Ventilelements (152);
einen oberen Einspritzdüsekörper (120), der den Aktor umgibt;
eine Auslassdüse (140) mit einem Auslassdurchgang (142), wobei die Ventilvorrichtung an einem Ende des Auslassdurchgangs mit der Auslassdüse verbunden ist, wobei der Längsdurchgang (70) der Ventilvorrichtung in direkter Fluidkommunikation mit dem Auslassdurchgang (142) steht;
einen Kraftstoffeinlassverteiler (130), der mindestens einen Einlassdurchgang einschließt und die Auslassdüse (140) an dem einen Ende des Auslassdurchgangs (142) umgibt; und
einen Umfangsströmungshohlraum (146), der die Ventilvorrichtung umgibt und innerhalb des oberen Einspritzdüsekörpers (120) und des Kraftstoffeinlassverteilers (130) definiert ist, wobei der Umfangsströmungshohlraum (146) in Fluidkommunikation mit dem Einlassdurchgang (142) und dem Durchgang (60) der Ventilvorrichtung steht.

13. Kraftstoffeinspritzdüse nach Anspruch 12 und Einspritzventil nach Anspruch 11, wobei der Umfangsabschnitt der Blattfeder (158) zwischen dem oberen Einspritzdüsekörper (120) und dem Kraftstoffeinlassverteiler (130) eingeklemmt ist.

## Revendications

1. Appareil de soupape pour une soupape d'injection comprenant :
un corps (20) ;
une surface d'étanchéité extérieure circonférentielle (30) pour la soupape d'injection à une première extrémité distale (22) du corps ;
une surface d'étanchéité intérieure circonférentielle (40) pour la soupape d'injection à la première extrémité distale (22) du corps ;
une cavité intérieure (50) s'étendant longitudinalement depuis la première extrémité distale (22) dans le corps (20) à l'intérieur de la surface d'étanchéité intérieure circonférentielle (40) ;
un passage radial (60) s'étendant d'un périmètre extérieur du corps à travers le corps jusqu'à la cavité intérieure ; et
un passage longitudinal (70) s'étendant à travers le corps depuis la première extrémité distale (22) jusqu'à une seconde extrémité (24) du corps entre les surfaces d'étanchéité extérieure et intérieure circonférentielles (30, 40) ;
dans lequel la section transversale du passage longitudinal (70) comprend un côté extérieur concave et un côté intérieur convexe ;
dans lequel le corps (20) comprend en outre une paroi extérieure circonférentielle (31) et une paroi intérieure circonférentielle (41), et la surface d'étanchéité extérieure circonférentielle (30) comprend une première surface plane ou une première surface incurvée au niveau d'une couronne de la paroi extérieure circonférentielle (31), et la surface d'étanchéité intérieure circonférentielle (40) comprend une seconde surface plane ou une seconde surface incurvée au niveau d'une couronne de la paroi intérieure circonférentielle (41) ;
**caractérisé en ce que** la paroi extérieure circonférentielle (31) comprend un surplomb faisant saillie radialement vers l'intérieur (33) à une extrémité distale de la paroi extérieure circonférentielle et que la paroi intérieure circonférentielle (41) comprend un surplomb faisant saillie radialement vers l'extérieur (43) à une extrémité distale de la paroi intérieure circonférentielle, dans laquelle le surplomb faisant saillie radialement vers l'intérieur (33) et le surplomb faisant saillie radialement vers l'extérieur (43) surplombent tous les deux le passage longitudinal (70).

2. Appareil de soupape selon la revendication 1, dans lequel :
le passage radial fait partie d'une pluralité de passages radiaux (60), chaque passage radial (60) s'étendant du périmètre extérieur du corps à travers le corps jusqu'à la cavité intérieure ; et
le passage longitudinal fait partie d'une pluralité de passages longitudinaux (70), chaque passage longitudinal s'étendant à travers le corps depuis la première extrémité distale (22) jusqu'à la seconde extrémité (24) du corps entre les surfaces d'étanchéité extérieure et intérieure circonférentielles (30, 40).

3. Appareil de soupape selon la revendication 1, comprenant en outre :
un deuxième passage radial (60) s'étendant du périmètre extérieur du corps à travers le corps jusqu'à la cavité intérieure ;
un troisième passage radial (60) s'étendant du périmètre extérieur du corps à travers le corps jusqu'à la cavité intérieure ;
un deuxième passage longitudinal (70) s'étendant à travers le corps depuis la première extrémité distale jusqu'à la seconde extrémité du corps entre les surfaces d'étanchéité extérieure et intérieure circonférentielles ; et
un troisième passage longitudinal (70) s'étendant à travers le corps depuis la première extrémité distale jusqu'à la seconde extrémité du corps entre les surfaces d'étanchéité extérieure et intérieure circonférentielles.

4. Appareil de soupape selon l'une quelconque des revendications précédentes, dans lequel l'appareil de soupape est un composant intégré ; ou l'appareil de soupape est fabriqué en métal ou en plastique.

5. Appareil de soupape selon l'une quelconque des revendications précédentes, comprenant en outre une bride circonférentielle (80) faisant saillie radialement vers l'extérieur du corps (20).

6. Appareil de soupape selon l'une quelconque des revendications précédentes, dans lequel l'extrémité distale de la paroi extérieure circonférentielle (31) comprend des sections inclinées (36, 37) de part et d'autre de la surface d'étanchéité extérieure circonférentielle (30) ou l'extrémité distale de la paroi intérieure circonférentielle (41) comprend des sections inclinées (46, 47) de part et d'autre de la surface d'étanchéité intérieure circonférentielle (40).

7. Appareil de soupape selon la revendication 1, dans lequel le corps est cylindrique, et la surface d'étanchéité extérieure circonférentielle (30) et la surface d'étanchéité intérieure circonférentielle (40) sont circulaires ; ou la surface d'étanchéité extérieure circonférentielle (30) s'appuie sur le périmètre extérieur du corps.

8. Soupape d'injection (110) comprenant :
l'appareil de soupape (10) selon l'une quelconque des revendications précédentes ; et
un élément de soupape (152) ;
dans lequel l'élément de soupape (152) est en contact avec la surface d'étanchéité extérieure circonférentielle (30) et la surface d'étanchéité intérieure circonférentielle (40) lorsque la soupape d'injection est en position fermée, et l'élément de soupape est espacé de la surface d'étanchéité extérieure circonférentielle et de la surface d'étanchéité intérieure circonférentielle lorsque la soupape d'injection est en position ouverte.

9. Soupape d'injection selon la revendication 8, dans laquelle
un côté amont de la soupape d'injection comprend la cavité intérieure (20) et le passage radial (60) ; et
le côté aval de la soupape d'injection comprend le passage longitudinal (70).

10. Soupape d'injection selon la revendication 8, dans laquelle l'élément de soupape (152) comprend une surface plate comme troisième surface d'étanchéité (154), la surface plate est en contact avec la surface d'étanchéité extérieure circonférentielle (30) et la surface d'étanchéité intérieure circonférentielle (40) lorsque la soupape d'injection est en position fermée, et la surface plate est espacée de la surface d'étanchéité extérieure circonférentielle et de la surface d'étanchéité intérieure circonférentielle lorsque la soupape d'injection est en position ouverte.

11. Soupape d'injection selon la revendication 8, dans laquelle l'élément de soupape (152) fait partie d'un appareil d'élément de soupape, l'appareil d'élément de soupape comprenant en outre :
une armature (156) ;
un ressort plat (158) ;
et une attache (160) qui fixe l'élément de soupape, l'armature et le ressort plat l'un à l'autre ;
dans lequel une partie du périmètre du ressort plat est fixe lorsqu'il fonctionne.

12. Injecteur de carburant pour un moteur à combustion interne comprenant :
la soupape d'injection selon l'une quelconque des revendications 8 à 11 ;
un ressort (170) qui pousse la soupape d'injection en position fermée ;
un actionneur (122) pour déplacer sélectivement l'élément de soupape (152) ;
un corps d'injecteur supérieur (120) entourant l'actionneur ;
une buse de sortie (140) comprenant un passage de sortie (142), l'appareil de soupape étant relié à la buse de sortie à une extrémité du passage de sortie, le passage longitudinal (70) de l'appareil de soupape étant en communication fluidique directe avec le passage de sortie (142) ;
un collecteur d'admission de carburant (130) comprenant au moins un passage d'admission et entourant la buse de sortie (140) à l'une des extrémités du passage de sortie (142) ; et
une cavité d'écoulement circonférentielle (146) entourant l'appareil de soupape et définie à l'intérieur du corps supérieur de l'injecteur (120) et du collecteur d'admission de carburant (130), la cavité d'écoulement circonférentielle (146) étant en communication fluidique avec le passage d'admission (142) et le passage (60) de l'appareil de soupape.

13. Injecteur de carburant selon la revendication 12 et la soupape d'injection selon la revendication 11, dans lesquels la partie périmétrique du ressort plat (158) est serrée entre le corps supérieur de l'injecteur (120) et le collecteur d'admission de carburant (130).
